(19)

Europäisches
Patentamt
European
Patent Office
Office européen
des brevets

(11) **EP 2 079 172 A1**

(12) **EUROPEAN PATENT APPLICATION**
published in accordance with Art. 153(4) EPC

(43) Date of publication:
**15.07.2009 Bulletin 2009/29**

(21) Application number: **07830182.7**

(22) Date of filing: **19.10.2007**

(51) Int Cl.:
*H04B 7/08* (2006.01)    *H04B 7/10* (2006.01)
*H04B 7/26* (2006.01)    *H04J 1/00* (2006.01)
*H04J 3/00* (2006.01)    *H04J 11/00* (2006.01)
*H04J 15/00* (0000.00)

(86) International application number:
**PCT/JP2007/070448**

(87) International publication number:
**WO 2008/053722 (08.05.2008 Gazette 2008/19)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **30.10.2006 JP 2006294354**

(71) Applicant: **Kyocera Corporation
Kyoto-shi, Kyoto 612-8501 (JP)**

(72) Inventor: **TANAKA, Takanori
Yokohama-shi, Kanagawa 224-8502 (JP)**

(74) Representative: **Elkiner, Kaya
Keltie
Fleet Place House
2 Fleet Place
London EC4M 7ET (GB)**

(54) **RADIO TRANSMISSION/RECEPTION DEVICE AND RADIO TRANSMISSION/RECEPTION METHOD**

(57)    To a wireless transmission/reception apparatus that has a plurality of antennas, and performs antenna diversity for transmission and reception and transmits and receives a radio signal of a frame configuration containing a plurality of symbol sequences in the frequency axis direction and the time axis direction by using the time division duplex scheme and the multicarrier scheme, a reception weight calculation unit 5-1 for calculating weight based on a first known signal contained in symbol sequences in the frequency axis direction among received signals of the plurality of antennas, a received signal synthesizing unit 6-1 for weighting the received signal based on the calculated weight and synthesizing the signal, a correction amount calculation unit 7-1 for calculating a correction amount of the symbol sequences at least in time axis direction based on a second known signal contained in the symbol sequences in the time axis direction among the synthesized received signals that were synthesized, and a transmission weighting unit 15-1 for correcting a transmission signal to be transmitted from the plurality of antennas and weighting the signal based on the weight in a transmission frame next to the reception frame where the weight and the correction amount have been calculated are provided.

FIG. 1

**Description**

CROSS REFERENCE TO RELATED APPLICATIONS

This application claims priority to and the benefit of Japan Patent Application No. 2006-294354 filed on October 30, 2006, the entire contents of which are incorporated herein by reference.

TECHNICAL FIELD

The present invention relates to a wireless transmission/reception apparatus and a wireless transmission/reception method.

BACKGROUND ART

In a wireless communication environment, interference of fading caused by multipath and interference of delayed waves caused by time fluctuations of a propagation path environment due to the Doppler shift are the factors for deterioration of the quality of received signals.

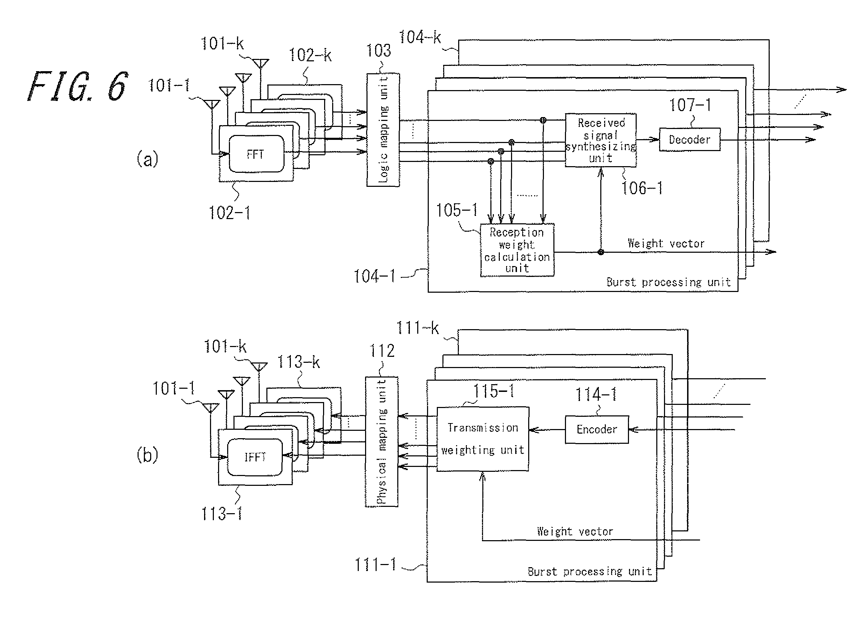

As a wireless transmission/reception apparatus designed to improve such problem, for example, a configuration shown in FIG..6 is known. This wireless transmission/reception apparatus has a plurality of antennas 101-1~101-k that constitute a multi-antenna, and performs antenna diversity both for transmission and reception, then transmits and receives data by using the Time Division Duplex (TDD) scheme and the multicarrier scheme of OFDMA (Orthogonal Frequency Division Multiple Access). FIG.6(a) shows a function block diagram of a receiver for the wireless transmission/reception apparatus, and FIG.6(b) shows a function block diagram of a transmitter for the wireless transmission/reception apparatus.

As for this wireless transmission/reception apparatus, in the receiver shown in FIG.6(a), the received signals at the antennas 101-1~101-k are demodulated per subcarrier by using Fast Fourier Transform respectively by the corresponding FFT processing units 102-1~102-k, then subjected to frequency mapping by a logic mapping unit 103 and supplied to the burst processing units 104-1~104-k.

The burst processing units 104-1~104-k have a reception weight calculation unit 105-1, a received signal unit 106-1 and a decoder 107-1. The received signals that have been subjected to frequency mapping by the logic mapping unit 103 are supplied in parallel to the reception weight calculation unit 105-1 and the received signal synthesizing unit 106-1. Then in the reception weight calculation unit 105-1, based on the received signal of a known signal (e.g. preamble) in a reception frame, a weight (weight vector) that allows each user (each channel) to obtain the maximum reception gain is calculated. In this case, the weight vector is calculated in accordance with the antenna diversity scheme by the antennas 101-1~101-k, for example, Adaptive Antenna System (AAS) and MIMO.

The weight vector calculated by the reception weight calculation unit 105-1 is supplied to the transmitter and the received signal synthesizing unit 106-1 as well. Then in the received signal synthesizing unit 106-1, the weight vector is multiplied with respect to the received signal from the antennas 101-1~101-k. Thus the received signal is synthesized. The synthesized received signal is decoded by the decoder 107-1.

In this manner, in the receiver, to the received signals from the antennas 101-1~101-k, reception process for weighting so as to obtain a high diversity gain by regulating fluctuations due to frequency selective fading is performed.

On the other hand, as shown in FIG.6(b), the transmitter has burst processing units 111-1~111-k, a physical mapping unit 112 and IFFT processing units 113-1~113-k. Then, an information signal to be transmitted is supplied to the burst processing units 111-1~111-k and a weight vector is supplied from the burst processing units 104-1~104-k of the receiver shown in FIG.6(a) as well.

The burst processing units 111-1~111-k have an encoder 114-1 and a transmission weighting unit 115-1. The information signal to be transmitted is coded by the encoder 114-1 and supplied to the transmission weighting unit 115-1, where the information signal is mapped per subcarrier and demodulated. In addition, the weight vector from the receiver is supplied to the transmission weighting unit 115-1. Then, based on the weight vector, the transmission information to the antennas 101-1~101-k is weighted. The weighted transmission information is subjected to frequency mapping by the physical mapping unit 112 and supplied to the IFFT processing units 113-1~113-k, where the information is subjected to inverse Fast Fourier Transform and transmitted from the antennas 101-1~101-k.

In this manner, in the transmitter, by weighting and transmitting the transmission signal from the antennas 101-1~101k in the next transmission frame based on the weight vector calculated on the receiver side, it is possible to obtain the highest synthesized gain on the receiver side.

However, the wireless transmission/reception apparatus shown in FIG.6 has effect on the fluctuations due to frequency selective fading, but does not compensate for the fluctuations of received signal due to temporal fading caused by a movement of a mobile terminal or the like.

As an apparatus that can compensate for the fluctuations due to temporal fading, for example, in Japanese Unexamined Patent Application Publication No. 2004-112098, a wireless transmission/reception apparatus that ensures the follow-up performance relative to the fluctuations due to temporal fading of propagation paths by storing some of the weights that have been calculated at the time of process during which reception has succeeded in the case of communication of data stream such as packet or the like, and by performing retransmission process by selecting a weight that maximizes an antenna diversity gain from the stored weights at the time of retransmission of the data that has caused reception error, is disclosed.

SUMMARY OF INVENTION

TECHNICAL PROBLEM

However, the wireless transmission/reception apparatus disclosed in the above mentioned Japanese Unexamined Patent Application Publication No. 2004-112098, at the time of retransmission process of the data stream that has caused reception error, compensates for the fluctuations due to temporal fading by using the weights that have been calculated in the past. Therefore, it is not possible to quickly respond to the temporal fading. Because of this, particularly, it is not possible to follow the fluctuations due to high-speed temporal fading caused by a high-speed movement of a mobile terminal or the like. As a result of that, there is concern that a transmission process is performed frequently, causing reduction in a communication speed.

Therefore, an object of the present invention in view of such circumstances is to provide a reliable wireless transmission/reception apparatus and wireless transmission/reception method that can quickly follow the fluctuations due to high-speed temporal fading and can also perform communication at the time of a high-speed movement of a mobile terminal without reducing the communication speed of data.

SOLUTION TO PROBLEM

According to a first aspect of the present invention to achieve the above object, a wireless transmission/reception apparatus having a plurality of antennas, performing antenna diversity for transmission and reception, and transmitting and receiving radio signal of a frame structure containing a plurality of symbol sequences in a frequency axis direction and a time axis direction by using a time division duplex scheme and a multicarrier scheme, comprising:

> a reception weight calculation unit for calculating a weight based on a first known signal contained in the symbol sequences in the frequency axis direction among received signals obtained from the plurality of antennas;
> a received signal synthesizing unit for weighing and synthesizing the received signals based on the weight calculated by the reception weight calculation unit;
> a correction amount calculation unit for calculating a correction amount of the symbol sequences at least in the time axis direction based on a second known signal contained in the symbol sequences in the time axis direction among synthesized received signals that have been synthesized by the received signal synthesizing unit; and
> a transmission weighting unit for weighting, after a transmission signal to be transmitted from the plurality of antennas is corrected based on the correction amount, the transmission signal based on the weight in a transmission frame next to a reception frame where the weight and the correction amount have been calculated.

According to a second aspect of the present invention, in the wireless transmission/reception apparatus according to the first aspect, the correction amount calculation unit calculates, as the correction amount, respective average values of phase shift amount and amplitude fluctuation amount in a data area of the reception frame where the weight has been calculated.

According to a third aspect of the present invention, in the wireless transmission/reception apparatus according to the second aspect, the transmission weighting unit provides a transmission initial phase by performing phase shift of the average value of the phase shift amount by a time from the central point of the data area on a time axis in the reception frame where the correction amount has been calculated to a head of the next transmission frame.

Further, according to a fourth aspect of the present invention to achieve the above object, a wireless transmission/reception apparatus having a plurality of antennas, performing antenna diversity for transmission and reception, and transmitting and receiving radio signal of a frame structure containing a plurality of symbol sequence in a frequency axis direction and a time axis direction by using a time division duplex scheme and a multicarrier scheme, comprising the steps of;

> calculating a weight based on a first known signal contained in the symbol sequences in the frequency axis direction among received signals obtained from the plurality of antennas;

weighting and synthesizing the received signals based on the calculated weight;

calculating a correction amount of the symbol sequences at least in the time axis direction based on a second known signal contained in the symbol sequences in the time axis direction among synthesized received signals that have been synthesized; and

weighting, after correcting a transmission signal to be transmitted from the plurality of antennas based on the correction amount, the transmission signal based the weight in a transmission frame next to a reception frame where the weight and correction amount have been calculated.

According to a fifth aspect of the present invention to achieve the above object, the wireless transmission/ reception apparatus according to the fourth aspect, further comprising the steps of; correcting the synthesized received signal based on the calculated correction amount; and recognizing error about the corrected synthesized received signal, wherein, when there is no error that cannot be corrected based on the recognition, the transmission signal to be transmitted from the plurality of antennas is corrected based on the correction amount and weighted based on the weight in the transmission frame next to the reception frame.

ADVANTAGEOUS EFFECT ON INVENTION

According to the present invention, a weight that maximizes a reception gain and a correction amount in the time axis direction are calculated in the reception frame, and based on these calculated weight and correction amount, a transmission signal to be transmitted is corrected and weighted in the next transmission frame. Therefore, it is possible to quickly follow the fluctuations due to high-speed temporal fading. Thus, a reliable wireless transmission/reception method and apparatus, that can perform communication without reducing a data communication speed even when a mobile terminal moves at a high speed, can be realized.

BRIEF DESCRIPTION OF DRAWINGS

FIG. 1 is a function block diagram showing a receiver and a transmitter of the wireless transmission/reception apparatus according to an embodiment of the present invention;

FIG. 2 is a diagram showing an example of a frame configuration for transmission and reception of the wireless transmission/reception apparatus shown in FIG.1;

FIG. 3 is a diagram schematically showing an application example of a weight vector and a linear correction amount of the wireless transmission/reception apparatus shown in FIG.1;

FIG. 4 is a flow chart showing a reception process by the receiver shown in FIG.1;

FIG. 5 is a flow chart showing a transmission process by the transmitter shown in FIG.1; and

FIG. 6 is a function block diagram showing a configuration of the receiver and the transmitter of the conventional wireless transmission/reception apparatus.

DESCRIPTION OF THE NUMBERS

[0023]

1-1~1-k. Antenna
2-1~2-k. FFT processing unit
3. Logic mapping unit
4-1~4-k. Burst processing unit
5-1. Reception weight calculation unit
6-1. Received signal synthesizing unit
7-1. Linear correction unit
8-1. Decoder
11-1~11-k. Burst processing unit
12. Physical mapping unit
13-1~13-k. IFFT processing unit
14-1. Encoder
15-1. Transmission weighting unit

BEST MODE FOR CARRYING OUT THE INVENTION

Hereinafter, preferred embodiment of the present invention will now be described with reference to the accompanying drawings.

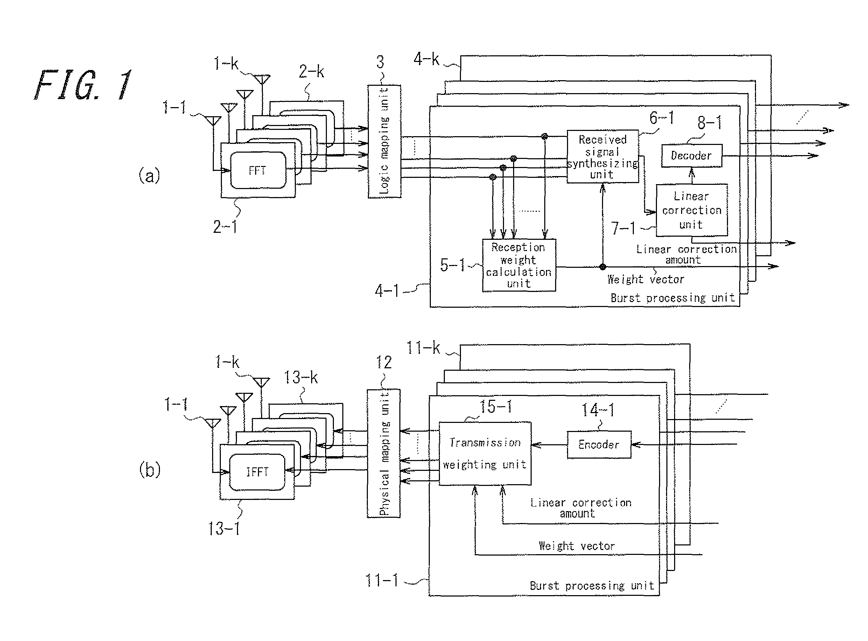

FIG. 1 shows a wireless transmission/reception apparatus according to an embodiment of the present invention. FIG.1(a) shows a function block diagram of a receiver and FIG.1(b) shows a function block diagram of a transmitter. This wireless transmission/reception apparatus is, as in the case of the wireless transmission/reception apparatus shown in FIG.6, has a plurality of antennas 1-1~1-k that constitute a multi-antenna, and performs antenna diversity both for transmission and reception and transmits and receives data by using the TDD (Time Division Duplex) scheme and the multicarrier scheme by the OFDMA (Orthogonal Frequency Division Multiple Access). In this case, for an explanatory convenience, the explanation is made assuming wireless transmission/reception apparatus is a base station.

As shown in FIG.1(a), the receiver has FFT processing units 2-1~2-k, a logic mapping unit 3 and burst processing units 4-1~4-k. The received signals at the antennas 1-1~1-k, after being subjected to Fast Fourier Transform and demodulated per subcarrier respectively by the corresponding FFT processing units 2-1~2-k, are subjected to frequency mapping by the logic mapping unit 3 and supplied to the burst processing units 4-1~4-k.

The burst processing units 4-1~4-k have a reception weight calculation unit 5-1, a received signal synthesizing unit 6-1, a linear correction unit 7-1 and a decoder 8-1. The received signals that have been subjected to frequency mapping by the logic mapping unit 3 are supplied in parallel to the reception weight calculation unit 5-1 and the received signal synthesizing unit 6-1. The reception weight calculation unit 5-1 calculates, based on a received signal of a first known signal, a weight (weight vector) that allows each user (each channel) to obtain the maximum reception gain.

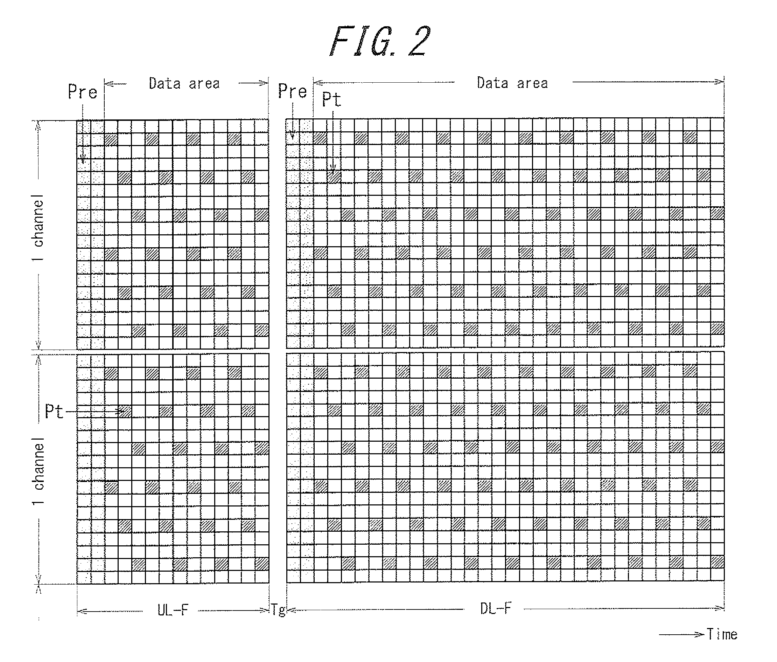

In the present embodiment, for example, as shown in FIG.2, the wireless transmission/reception apparatus transmits and receives data by a frame structure that contains a plurality of symbol sequences in the frequency axis direction and the time axis direction. In other words, the wireless transmission/reception apparatus performs duplex communication by repeating an uplink frame UL-F (reception frame) and a downlink frame DL-F (transmission frame) alternately via a guard time Tg. In this case, the uplink frame UL-F and the downlink frame DL-F have a known preamble Pre contained in the symbol sequences in the frequency axis direction and a subsequent data area corresponding respectively to the terminals , and in the data area, a known pilot signal Pt (subcarrier), which is a reference signal for synchronization establishment, is included. FIG.2 shows a case where 1 channel consists of 18 subcarriers.

Therefore, in the present embodiment, the reception weight calculation unit 5-1 calculates, based on a received signal of the preamble Pre (a first known signal), a weight vector that allows each channel to obtain the maximum reception gain. In addition, the weight vector is calculated in accordance with the antenna diversity scheme for the antennas 1-1~1-k, for example, Adaptive Antenna System (AAS) and MIMO.

The weight vector calculated by the reception weight calculation unit 5-1 is supplied to the transmitter and also supplied to the received signal synthesizing unit 6-1. The received signal synthesizing unit 6-1 with respect to the all of the received signals (in the frequency axis direction and in the time axis direction) from the antennas 1-1~1-k, multiplies and synthesizes the weight vector and obtains a synthesized received signal.

In this case, any measures against the time fluctuations have not been taken to the synthesized received signal obtained from the received signal synthesizing unit 6-1. Therefore, the synthesized received signal, as a sample time thereof becomes late, could have been subjected to phase shift and amplitude fluctuation due to the influence of fading.

Consequently, in the present embodiment, the synthesized received signal from the received signal synthesizing unit 6-1 is supplied to the linear correction unit 7-1, where, based on a pilot signal Pt (a second known signal) contained in the synthesized received signal, respective average values of phase shift amount and amplitude fluctuation amount in the data area of the uplink frame UL-F are calculated as a linear correction amount in the time axis direction. Then, the linear correction unit 7-1 corrects the synthesized received signal based on the linear correction amount. At this time, since the weight is corrected per channel with respect to the frequency axis, the number of samples of linear average parameter is increased when the linear correction unit 7-1 takes a shift average of phase and amplitude of all of the pilot signals Pt within 1 channel. Then as a result, estimated errors of the linear correction amount can be reduced.

Therefore, when the linear correction unit 7-1 corrects the synthesized received signal by adding the linear correction amount of phase and amplitude to the synthesized received signal, reception errors can be reduced corresponding to the time fluctuations. In other words, generally, with respect to the communication with a mobile terminal (mobile station), incoming waves are subjected to the Doppler shift that is dependant on the Doppler frequency both for the mobile station and the base station. Because of this, the received signal will be in the state where amplitude and phase temporally fluctuate. In that case, in a short period of time such as a few $\mu$s, assuming that the fluctuation amount of a position vector of the mobile station and the base station is constant, it is possible to consider the fluctuations of phase and amplitude in the frame as linear by recognizing the Doppler fluctuation amount of the frame as a single amount. When such environment is assumed, when a symbol fluctuation from a frame head to a frame end is linearly interpolated, the influence of the Doppler fluctuation is reduced. Therefore, symbol errors (shift from the expected value) by phase and amplitude fluctuations at the rear portion of the frame can be reduced, and thus, the reception errors can be reduced.

The synthesized received signal corrected by the linear correction amount by the linear correction unit 7-1 is supplied to the decoder 8-1 and decoded. In addition, the linear correction amount calculated by the linear correction unit 7-1 is supplied to the transmitter.

On the other hand, as shown in FIG.1(b), the transmitter has burst processing units 11-1~11-k, a physical mapping unit 12 and IFFT processing units 13-1~13-k. To the burst processing units 11-1~11-k, an information signal to be transmitted is supplied and a weight vector and a linear correction amount from the burst processing units 4-1~4-k of the receiver shown in FIG.1(a) are also supplied.

The burst processing units 11-1~11-k has an encoder 14-1 and a transmission weighting unit 15-1, and an information signal to be transmitted is coded by the encoder 14-1 and supplied to the transmission weighting unit 15-1. The burst processing units 11-1~11-k perform mapping of the information signal that has been coded by the encoder 14-1 per subcarrier and demodulate the signal. In addition, a weight vector and a linear correction amount from the receiver are supplied to the transmission weighting unit 15-1. The transmission weighting unit 15-1, based on these weight vector and linear correction amount, corrects and weights the information signal for transmitting to the antennas 1-1~1-k. The information signal, which has been corrected and weighted by the transmission weighting unit 15-1, is subjected to frequency mapping by the physical mapping unit 12 and supplied to the IFFT processing units 13-1~13-k. The IFFT processing units 13-1~13-k perform inverse Fast Fourier Transform on the information signal that has been subjected to frequency mapping by the physical mapping unit 12, then the information signal that has been subjected to inverse Fast Fourier Transform is transmitted from the antennas 1-1~1-k.

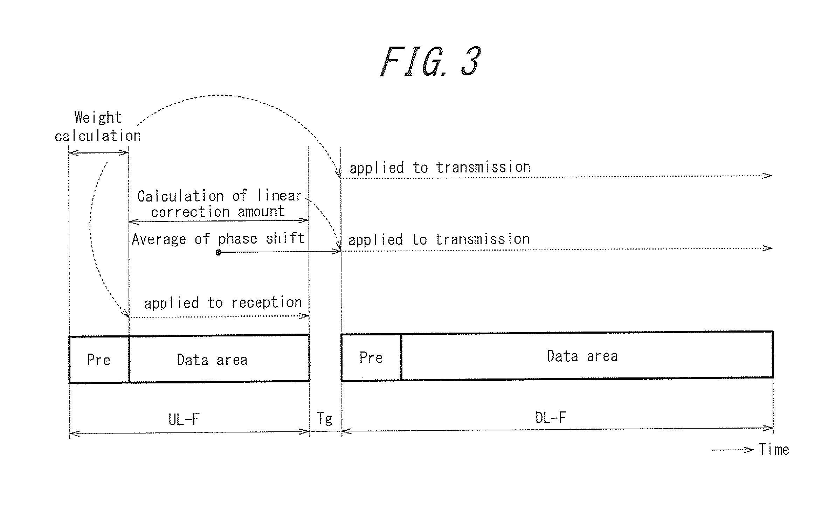

In other words, an application example of the weight vector and the linear correction amount is schematically shown in Fig.3. However, in this case, the transmitter immediately uses the linear correction amount determined by the receiver in the downlink frame DL-F, which is a transmission frame next to the uplink frame UL-F, which is a reception frame that has determined the linear correction amount. In other words, the transmitter, at first, performs linear interpolation of the time fluctuation of the propagation path by adding a phase fluctuation amount in the linear correction amount to the transmission signal that has been coded and mapped. In addition, the transmitter adds a weight vector as a transmission signal per antenna to the transmission signal that has been subjected to linear interpolation. After that, the transmitter transmits the signal to which the weight vector has been added.

In this case, a time difference as shown in FIG.3 exists between the transmission process and the reception process. Because of this, with respect to a phase (transmission initial phase) that is given to the first signal of the transmission signal, a phase shift amount (average value) is shifted by the amount of the time difference between the reception and the transmission of the communication system by taking the guard time Tg into consideration. Thus, a function that assists interpolation of time fluctuation of propagation path during transmission can be further expected. Therefore, in this case, the linear correction amount of the phase calculated by the uplink frame UL-F is an average value of the phase shift amount of the pilot signal Pt in the data area. Then, since the average value is located at the central point of the data area on the time axis, the transmission initial phase is given by performing phase shift of the calculated average phase shift amount by the amount of time from the central point to the head of the transmission portion that is defined with respect to the system.

In addition, the FFT processing units 2-1~2-k, the logic mapping unit 3, and the burst processing units 4-1~4-k that constitute the receiver and the burst processing units 11-1~11-k, the physical mapping unit 12 and the IFFT processing units 13-1~13-k that constitute the transmitter are constituted by, for example, DSP (Digital Signal Processor) and FPGA (Field Programmable Gate Array).

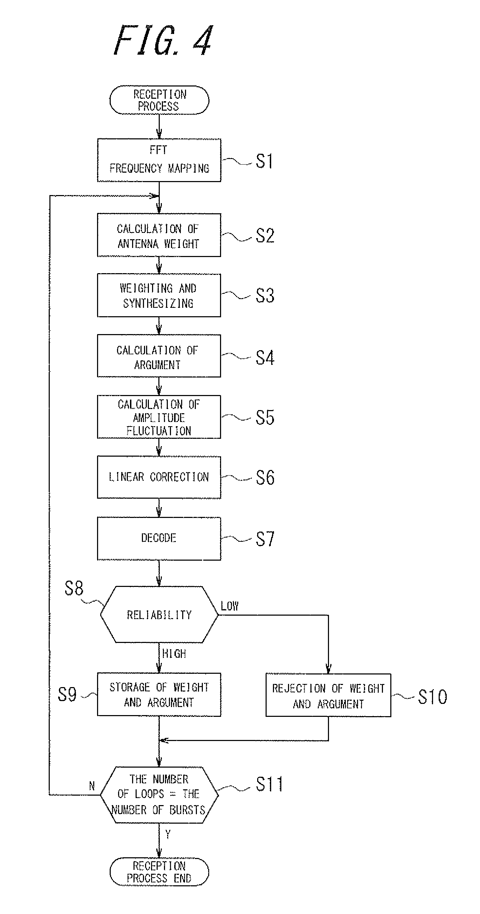

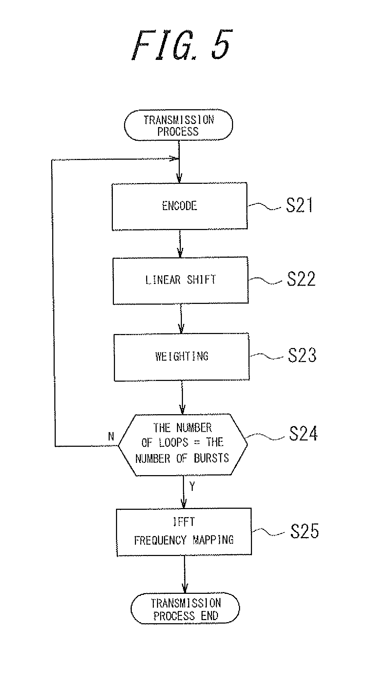

FIGS. 4 and 5 are flow charts showing the reception process by the receiver and the transmission process by the transmitter of the wireless transmission/reception apparatus of the present embodiment.

At first, the reception process by the receiver shown in FIG.4 is concretely described. In the reception process, at first, the received signals at the antennas 1-1~1-k are subjected to Fast Fourier Transform respectively by the FFT processing units 2-1~2-k. Then after that, the logic mapping unit 3 performs frequency mapping of the received signals that have been subjected to Fast Fourier Transform by the FFT processing units 2-1~2-k (step S1). Then, in each of the burst processing units 4-1~4-k, the reception weight calculation unit 5-1, based on the received signals of the preamble Pre, calculates a weight vector that allows obtaining the maximum reception gain per channel (step S2). The received signal synthesizing unit 6-1 multiplies and synthesizes the weight vector to the corresponding received signal and obtains a combined received signal (step S3).

In other words, in step S2, at first, the reception weight calculation unit 5-1 calculates an error signal e(t) from the following equation (1), where an input signal is r(t), an output signal that has been demodulated is y(t), a weight vector is W, and an input signal sequence vector of each antenna is X(t), provided that when $0 \leqq t < N_{Pre}$, $N_{Pre}$ indicates the number of preambles.

[Equation 1]

$$e(t) = r(t) - y(t) = r(t) - W^H X(t) \qquad (1)$$

Next, the reception weight calculation unit 5-1 calculates, in accordance with the least square error method, an expected square value of the error signal from the following equation 2.

[Equation 2]

$$E\left[|e(t)^2|\right] = E\left[\left|r(t) - W^H X(t)\right|^2\right] \qquad (2)$$

Further, the reception weight calculation unit 5-1 differentiates and expands the above mentioned equation (2) to obtain the following equation (3).

[Equation 3]

$$\nabla_w E\left[|e(t)|^2\right] = -2r_{xd} + 2R_{xx}W \qquad (3)$$

Provided that $r_{xd}$ a indicates a correlation vector between a reference signal and an input signal, and $R_{xx}$ indicates a correlation matrix between each of the antennas.

Based on the above mentioned equation (3), the reception weight calculation unit 5-1 calculates an optimal weight vector $W_{opt}$ from the equation (4) shown below.

[Equation 4]

$$W_{opt} = R_{xx}^{-1} r_{xd} \qquad (4)$$

Further, in step S3, the received signal synthesizing unit 6-1 determines an output signal y(t) after demodulation, which is a synthesized received signal, in accordance with the following equation (5) by using the weight vector $W_{opt}$ determined from the above mentioned equation (4), provided that in the equation (5), when $0 \leqq t < N_{symbol}$, $N_{symbol}$ indicates a total symbol.

[Equation 5]

$$y(t) = W_{opt}^H X(t) \qquad (5)$$

When the synthesized received signal y(t) is determined, then, the linear correction unit 7-1 determines a linear average of phase (argument) and amplitude shifts in the time axis direction by using a known pilot signal Pt (subcarrier) included in the data area (steps S4 and S5), and based on that, performs linear correction of the synthesized received signal (step S6). For this, at first, based on the above mentioned equation (4), the optimal vector $W_{pilot}$ of the pilot signal Pt portion after demodulation shown in FIG.2 is determined from the following equation (6), where $r_{yp}$ indicates a correlation vector between a reference signal and a demodulation signal, and $r_{yy}$ indicates a correlation vector of the demodulation signal.

[Equation 6]

$$W_{pilot} = r_{yy}^{-1} r_{yp} \qquad (6)$$

Next, the linear correction unit 7-1 determines an argument (phase shift amount) θ of $W_{pilot}$ from the following

equation (7).

[Equation 7]

$$\theta = \arg(W_{pilot}) \qquad (7)$$

In addition, since the expected value is 1, an amplitude fluctuation amount $\Delta_r$ of $W_{pilot}$ is calculated from the following equation (8).

[Equation 8]

$$\Delta_r = 1 - \left| W_{pilot} \right| \qquad (8)$$

After that, the linear correction unit 7-1 equally divides the argument $\theta$ and the amplitude fluctuation amount $\Delta_r$ determined from the above mentioned equations (7) and (8) by the number of the pilot symbols $N_{pilot}$ in 1 channel, and determines a linear average $\theta_{sym}$ of the phase shift amount and a linear average $\Delta_{sym}$ of the amplitude fluctuation amount per symbol.

[Equation 9]

$$\theta_{sym} = \frac{2\theta}{N_{pilot}} \qquad (9)$$

$$\Delta_{sym} = \frac{2\Delta}{N_{pilot}} \qquad (10)$$

As described above, when the linear correction unit 7-1 determines the linear average $\theta_{sym}$ of the phase shift amount and the linear average $\Delta_{sym}$ of the amplitude fluctuation amount, fluctuations of phase and amplitude are corrected in a total symbol space by giving the result to the data symbol space as a shift amount in step S6.

When the linear correction unit 7-1 performs linear correction of the fluctuations of phase and amplitude of the synthesized received signal in step S6, the corrected synthesized signal is decoded by the decoder 8-1 (step S7). In the present embodiment, error check (CRC check or the like) of decoded data frame or packet or the like is further performed and reliability is determined (step S8). As a result of that, when there is no error that cannot be corrected, it is determined that the reliability is high, and the weight vector and the linear correction amount calculated in the frame are stored (step S9). The stored weight vector and linear correction amount are used for the transmission process by the transmitter in the next transmission frame.

On the other hand, when there is an error that cannot be corrected, it is determined that the reliability is low, and the weight vector and the linear correction amount calculated in the frame are rejected (step S10). In this case, the weight vector and the linear correction amount calculated in the highly reliable latest reception frame that have already been stored are used for the transmission process by the transmitter in the next transmission frame.

The steps after step S2 are repeated in step S11 for the number of times equal to the number of bursts, and the reception process is finished.

Next, the transmission process by the transmitter shown in FIG.5 is concretely described. As for the transmitter, at first, in each of the burst processing units 11-1~11-k, an information signal to be transmitted is coded by the encoder 14-1 (step S21), then the signal is mapped and copied for the number of antennas by the transmission weighting unit 15-1, then subjected to linear shift (step S22) and weighting (step S23) based on the linear correction amount and the weight vector from the receiver.

In other words, in step S22, the phase fluctuation amount of the linear correction amount from the receiver is added to the transmission signal that have been coded and mapped. In this case, since the phase fluctuation average (argument) in the data area of the uplink frame UL-F is 0 , the time fluctuation per symbol is determined from the above mentioned equation (9). Therefore, as shown in FIG.3, the number of symbols $N_{DL}$ in the time $T_{DL}$ is approximated by the following equation, where the time from the central point of the data area of the uplink frame UL-F to the first transmission symbol of the downlink frame DL-F is $T_{DL}$ and a 1 symbol interval is $t_{symbol}$.

[Equation 10]

$$N_{DL} = \frac{T_{DL}}{t_{symbol}} \qquad (11)$$

Based on the above mentioned equation (11), a shift amount of the transmission signal that has been temporally transitioned from the uplink frame UL-F is defined as

[Equation 11]

$$e^{i\theta_{sym}N_{DL}} .$$

Then, when the transmission signal vector that has been coded, mapped and copied for the number of antennas is defined as $X_{tx}$, the transmission signal $X_{shifted-tx}$ to which the phase fluctuation is added per symbol is determined from the following equation (12), provided that when $0 \leqq t < N_{DL-END}$, $N_{DL-END}$ indicates a total transmission symbol of 1 channel of the downlink frame DL-F.

[Equation 12]

$$X_{shifted\_tx}(t) = X_{tx}(t)e^{i\theta_{sym}(N_{DL}+t)} \qquad (12)$$

Moreover, in step S23, a weighed transmission signal vector Z(t) is calculated from the following equation, where the transmission weight vector is $W_{tx}$.

[Equation 13]

$$Z(t) = W_{tx}^{H} X_{shifted\_tx}(t) \qquad (13)$$

After the steps following step S21 are repeated for the number of times equal to the number of bursts, frequency mapping by the physical mapping unit 12 and inverse Fast Fourier Transform by the IFFT processing units 13-1~13-k are performed in step S25. Then the signal that has been subjected to inverse Fast Fourier Transform is transmitted from the antennas 1-1~1-k. Thus the process is finished.

As described above, in the present embodiment, the receiver calculates a weight that maximizes a reception gain and a fluctuation average of phase and amplitude as a linear correction amount in the time axis direction in the uplink frame UL-F, and the transmitter corrects and weights a transmission signal to be transmitted based on these calculated weight and linear correction amount in the next downlink frame DL-F. Therefore, it is possible to quickly follow the fluctuations due to high-speed temporal fading. Thus, since it is possible to perform communication without reducing a communication speed of data even during a high-speed movement of a mobile terminal. Thus QoS and reliability of communication can be improved.

Further, this invention is not limited to the above mentioned embodiment, but various modifications or changes are available. For example, in the above embodiment, a wireless transmission/reception apparatus is described as a base station. However, it is possible to apply in the same manner to a mobile station (terminal) when it has a multi antenna and performs antenna diversity. In this case, at the terminal, the uplink frame is a transmission frame and the downlink frame is a reception frame. Therefore, contrary to the case of the base station, a weight that maximizes a reception gain and a fluctuation average of phase and amplitude as a linear correction amount in the time axis direction are calculated in the downlink frame. Then based on these calculated weight and linear correction amount, a transmission signal to be transmitted may be corrected and weighted in the next uplink frame. In addition, communication scheme by multicarrier is not limited to OFDMA, but the present invention can effectively applied also to the known multicarrier schemes such as OFDM (Orthogonal Frequency Division Multiplexing) and DMT (Discrete Multi-Tone).

**Claims**

1. A wireless transmission/reception apparatus having a plurality of antennas, performing antenna diversity for transmission and reception, and transmitting and receiving radio signal of a frame structure containing a plurality of symbol sequences in a frequency axis direction and a time axis direction by using a time division duplex scheme and a multicarrier scheme, comprising:

a reception weight calculation unit for calculating a weight based on a first known signal contained in the symbol sequences in the frequency axis direction among received signals obtained from the plurality of antennas;
a received signal synthesizing unit for weighing and synthesizing the received signals based on the weight calculated by the reception weight calculation unit;
a correction amount calculation unit for calculating a correction amount of the symbol sequences at least in the time axis direction based on a second known signal contained in the symbol sequences in the time axis direction among synthesized received signals that have been synthesized by the received signal synthesizing unit; and
a transmission weighting unit for weighting, after a transmission signal to be transmitted from the plurality of antennas is corrected based on the correction amount, the transmission signal based on the weight in a transmission frame next to a reception frame where the weight and the correction amount have been calculated.

2. The wireless transmission/reception apparatus according to claim 1, wherein the correction amount calculation unit calculates, as the correction amount, respective average values of phase shift amount and amplitude fluctuation amount in a data area of the reception frame where the weight has been calculated.

3. The wireless transmission/reception apparatus according to claim 2, wherein the transmission weighting unit provides a transmission initial phase by performing phase shift of the average value of the phase shift amount by a time from the central point of the data area on a time axis in the reception frame where the correction amount has been calculated to a head of the next transmission frame.

4. A wireless transmission/reception apparatus having a plurality of antennas, performing antenna diversity for transmission and reception, and transmitting and receiving radio signal of a frame structure containing a plurality of symbol sequences in a frequency axis direction and a time axis direction by using a time division duplex scheme and a multicarrier scheme, comprising the steps of;

calculating a weight based on a first known signal contained in the symbol sequences in the frequency axis direction among received signals obtained from the plurality of antennas;
weighting and synthesizing the received signals based on the calculated weight;
calculating a correction amount of the symbol sequences at least in the time axis direction based on a second known signal contained in the symbol sequences in the time axis direction among synthesized received signals that have been synthesized; and
weighting, after correcting a transmission signal to be transmitted from the plurality of antennas based on the correction amount, the transmission signal based the weight in a transmission frame next to a reception frame where the weight and correction amount have been calculated.

5. The wireless transmission/reception apparatus according to claim 4, further comprising the steps of; correcting the synthesized received signal based on the calculated correction amount; and recognizing error about the corrected synthesized received signal, wherein, when there is no error that cannot be corrected based on the recognition, the transmission signal to be transmitted from the plurality of antennas is corrected based on the correction amount and weighted based on the weight in the transmission frame next to the reception frame.

*FIG. 1*

(a)

(b)

EP 2 079 172 A1

FIG. 2

# FIG. 3

EP 2 079 172 A1

# FIG. 4

RECEPTION PROCESS

FFT FREQUENCY MAPPING — S1

CALCULATION OF ANTENNA WEIGHT — S2

WEIGHTING AND SYNTHESIZING — S3

CALCULATION OF ARGUMENT — S4

CALCULATION OF AMPLITUDE FLUCTUATION — S5

LINEAR CORRECTION — S6

DECODE — S7

S8 — RELIABILITY

LOW

HIGH

S9 — STORAGE OF WEIGHT AND ARGUMENT

REJECTION OF WEIGHT AND ARGUMENT — S10

THE NUMBER OF LOOPS = THE NUMBER OF BURSTS — S11

N

Y

RECEPTION PROCESS END

14

# FIG. 5

FIG. 6

(a)

101-1
101-k
102-k
103
104-k

FFT

102-1

Logic mapping unit

Received signal synthesizing unit

106-1

107-1

Decoder

105-1

Reception weight calculation unit

Weight vector

104-1

Burst processing unit

(b)

101-1
101-k
113-k
112
111-k

IFFT

113-1

Physical mapping unit

115-1

Transmission weighting unit

114-1

Encoder

Weight vector

111-1

Burst processing unit

## INTERNATIONAL SEARCH REPORT

| | International application No. |
| --- | --- |
| | PCT/JP2007/070448 |

A. CLASSIFICATION OF SUBJECT MATTER
*H04B7/08*(2006.01)i, *H04B7/10*(2006.01)i, *H04B7/26*(2006.01)i, *H04J1/00*
(2006.01)i, *H04J3/00*(2006.01)i, *H04J11/00*(2006.01)i, *H04J15/00*(2006.01)i

According to International Patent Classification (IPC) or to both national classification and IPC

B. FIELDS SEARCHED

Minimum documentation searched (classification system followed by classification symbols)
H04B7/08, H04B7/10, H04B7/26, H04J1/00, H04J3/00, H04J11/00, H04J15/00

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2004-343282 A (Japan Radio Co., Ltd.),<br>02 December, 2004 (02.12.04),<br>Par. Nos. [0031] to [0035], [0079] to [0089];<br>Figs. 12, 13<br>& CN 1551529 A | 1-4<br>5 |
| Y<br>A | JP 2004-222241 A (Sanyo Electric Co., Ltd.),<br>05 August, 2004 (05.08.04),<br>Par. Nos. [0034] to [0045]; Figs. 6, 7<br>& US 2004-137906 A1    & EP 1434452 A1<br>& CN 1512699 A       & TW 2004-21758 A | 1-4<br>5 |
| Y<br>A | JP 2002-368714 A (Denso Corp.),<br>20 December, 2002 (20.12.02),<br>Full text; all drawings<br>& US 2002-196734 A1 | 1-4<br>5 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10 January, 2008 (10.01.08) | Date of mailing of the international search report<br>22 January, 2008 (22.01.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2007/070448 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2006-180511 A  (Samsung Electronics Co.,<br>Ltd.),<br>06 July, 2006 (06.07.06),<br>Par. Nos. [0003] to [0008]; Fig. 1<br>& US 2006-133529 A1     & EP 1675336 A1<br>& CN 1794712 A | 1-4<br>5 |
| A | JP 2006-504335 A  (Qualcomm Inc.),<br>02 February, 2006 (02.02.06),<br>Full text; all drawings<br>& WO 2004/039011 A2     & EP 1615384 A1<br>& US 2004-082356 A1     & CN 1717900 A<br>& TW 2004-20150 A      & KR 2005-053787 A | 1-5 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006294354 A
- JP 2004112098 A